Europäisches Patentamt

(19) European Patent Office

Office européen des brevets

(11) Numéro de publication: **0 031 263**
**B1**

(12) **FASCICULE DE BREVET EUROPEEN**

(45) Date de publication du fascicule du brevet:
02.10.85

(51) Int. Cl.⁴: **G 02 F 1/35**, G 02 F 1/37

(21) Numéro de dépôt: 80401646.7

(22) Date de dépôt: 17.11.80

(54) **Dispositif optique non-linéaire à guide d'onde composite et source de rayonnement utilisant un tel dispositif.**

(30) Priorité: 14.12.79 FR 7930720

(43) Date de publication de la demande:
01.07.81 Bulletin 81/26

(45) Mention de la délivrance du brevet:
02.10.85 Bulletin 85/40

(84) Etats contractants désignés:
**DE GB NL**

(56) Documents cités:
**FR - A - 2 193 990**
**US - A - 3 856 379**

**APPLIED PHYSICS LETTERS, vol. 34, no. 1, janvier 1979, New York, US, N. UESUGI et al.: "Electric field tuning of second-harmonic generation in a three-dimensional LiNb03 optical waveguide", pages 60-61**
**INTEGRATED OPTICS (A digest of technical papers presented at the topical meeting on integrated optics), 12-14 janvier 1976, Salt Lake City Utah, Washington US, F. ZERNIKE: "Second harmonic generation in composite waveguides", pages WA 3-1 - Wa 3-3**
**OPTICS LETTERS, vol. 2, no. 6, 6 juin 1978, pages 139-141**
**IEEE Quantum Electronics, vol. QE9, Sept. 1973, pages 919-924**

(73) Titulaire: **THOMSON-CSF, 173, Boulevard Haussmann, F-75379 Paris Cedex 08 (FR)**

(72) Inventeur: **Puech, Claude, THOMSON-CSF - SCPI 173, Bld Haussmann, F-75360 Paris Cedex 08 (FR)**
Inventeur: **Papuchon, Michel, THOMSON-CSF - SCPI 173, Bld Haussmann, F-75360 Paris Cedex 08 (FR)**

(74) Mandataire: **Wang, Pierre et al, THOMSON-CSF SCPI 173, Bld Haussmann, F-75379 Paris Cedex 08 (FR)**

(56) Documents cités: (suite)
**APPLIED OPTICS, vol. 10, no. 11, Novemb. 1971, pages 2408-2413**
**APPLIED PHYSICS LETTERS, vol. 27, no. 2, 15 juillet 1975, pages 71-73**

**Description**

La présente invention se rapporte aux dispositifs optiques permettant d'engendrer dans un matériau de propagation nonlinéaire un rayonnement dont la longueur d'onde est un sousmultiple de la longueur d'onde d'un autre rayonnement appliqué à ce matériau. Elle concerne plus particulièrement les structures intégrées dans lesquelles les deux rayonnements interagissent non linéairement en accord de phase au sein d'un guide d'onde obtenu par la diffusion d'ions métalliques depuis la surface d'un substrat. Il est connu de réaliser par diffusion de titane dans du niobate de lithium des guides d'ondes intégrés permettant de convertir partiellement une onde fondamentale en une onde harmonique. Le rendement de conversion d'une telle structure rest faible. Une telle technique est décrite, par exemple, dans l'article de UESUGI et al paru dans APPLIED PHYSICS LETTERS, vol. 34, No. 1, janvier 1979, pages 60—61. En effet, le confinement et la grande longueur d'interaction des ondes ne sont pas les seuls facteurs à considérer pour atteindre un rendement de conversion satisfaisant. La fait qu'il faille satisfaire à la condition d'accord de phase, implique un choix des modes de propagation pour lesquels la valeur de l'intégrale de recouvrement est faible.

Pour résoudre le problème que pose le choix des modes susceptibles d'offrir une valeur appropriée de l'intégrale de recouvrement, on a proposé de recouvrir un guide d'onde en sulfure de zinc au moyen d'une couche passive d'oxyde de titane. Cette technique est décrite, par exemple, dans l'article de ITO et al paru dans OPTICS LETTERS, juin 1978, vol 2, No. 6, pages 139—141. Cette technique ne peut pas s'appliquer aux guides obtenus par diffusion de titane dans le niobate de lithium, car les modes qui réalisent l'accord de phase ont une intégrale de recouvrement faible. En effet, l'accord de phase peut être obtenu entre le mode zéro du rayonnement fondamental et les modes d'ordre supérieur du rayonnement harmonique. Comme les indices effectifs des deux premiers modes de rayonnement harmonique sont supérieurs à l'indice effectif du premier mode du rayonnement fondamental, l'adjonction d'une couche passive à la structure de guidage entraîne un relèvement des indices effectifs, d'où il résulte que le premier accord de phase se produit pour un mode du rayonnement harmonique de rang plus élevé que celui que l'on est à même d'utiliser en l'absence de cette couche passive.

En vue de pallier les inconvénients mentionnés ci-dessus, l'invention propose d'appliquer la technique de la couche passive à une structure de guidage pour laquelle la plage d'indice effectif du rayonnement fondamental est située plus haut que celle du rayonnement harmonique. Cette technique prend pour base une structure de guidage qui ne permet pas d'obtenir directement l'accord de phase faute de recouvrement entre les plages d'indice effectif.

L'invention a pour objet un dispositif non linéaire destiné à engendrer un rayonnement harmonique à partir d'un rayonnement fondamental incident, tel que défini dans la revendication 1.

L'invention sera mieux comprise au moyen de la description ci-après et des figures annexées, parmi lesquelles:

la figure 1 est une vue isométrique d'un dispositif non linéaire connu de l'état de la technique, associé à une source de rayonnement monochromatique;

la figure 2 est un diagramme explicatif relatif aux dispositifs respectifs des figures 1 et 3;

la figure 3 et une vue isométrique d'un dispositif optique non-linéaire conforme à l'invention;

la figure 4 est une figure explicative relative au dispositif de la figure 3.

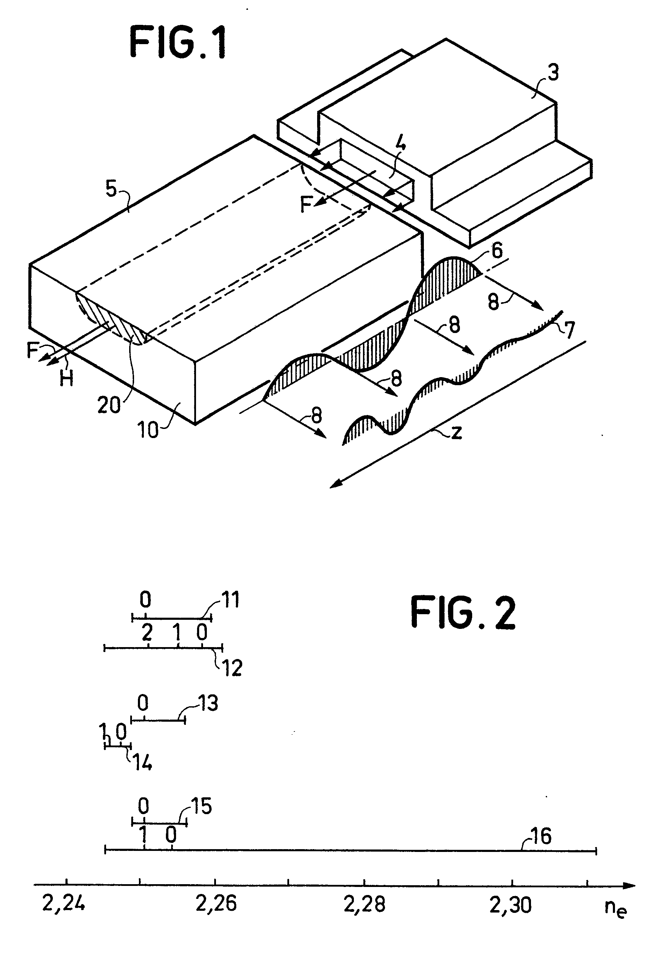

Sur la figure 1, on peut voir une source de rayonnement 3 dont la fenêtre de sortie 4 émet un rayonnement monochromatique (ci-après dénommé rayonnement fondamental F) de longueur d'onde $\lambda_F$, qui se propage parallèlement à l'axe z. Ce rayonnement est reçu par un dispositif optique non-linéaire dont la structure comporte un substrat 10 à la surface 5 duquel on a délimité par diffusion d'un ion métallique un canal de guidage 20. Le substrat 10 est taillé dans un matériau optiquement non-linéaire en niobate de lithium. L'ion métallique diffusé est choisi de façon que l'indice de réfraction n dans la zone diffusée 20 soit supérieur à l'indice de réfraction $n_s$ du substrat. A cet effet, on peut envisager une diffusion de titane ou de nickel. La zone diffusée est complètement entourée par des milieux moins réfringents et constitue un guide d'onde intégré. Ce guide assure un bon confinement des rayonnements et lorsque l'accord de phase est réalisé, il permet d'obtenir facilement une longue distance d'interaction non-linéaire. Il va sans dire que sur la figure 1 les dimensions transversales du guide sont fortement exagérées.

Pour illustrer le processus d'interaction, on a schématisé sur la figure 1 la distribution d'amplitude 6 à l'instant t de l'onde fondamentale F de longueur d'onde $\lambda_F$. L'énergie de cette onde provient de la source 3 et au fur et à mesure qu'elle progresse dans la direction z, celle-ci cède une partie de son énergie à une onde harmonique H de longueur d'onde

$$\lambda_H = \frac{\lambda_F}{k},$$

où k est un entier supérieur à l'unité.

L'onde harmonique H prend naissance au sein du guide d'onde 20 grâce à l'interaction non-linéaire qui s'y produit; elle est schématisé sur la figure 1 par la distribution d'amplitude 7. Les flèches 8 matérialisent le transfert d'énergie de l'onde fondamentale vers l'onde harmonique; elles mettent aussi en évidence l'accord de phase qui suppose que les indices de réfraction effectifs des deux ondes soient égaux à l'intérieur du guide 20 pour la direction de propagation z.

Chacune des deux ondes est susceptible de plusieurs modes de propagation auxquels correspondent des valeurs distinctes de l'indice effectif $n_e$. Sur la figure 2, on a tracé en regard d'une échelle horizontale donnant la valeur de l'indice effectif $n_e$, des segments 11 à 16 qui matéàrialisent les plages où peuvent se situer les indices effectifs respectifs des différents modes possibles des ondes fondamentale et harmonique. Les valeurs particulières prises par l'indice pour différents modes de propagation sont repérées par des traits référencés au moyen des nombres 0, 1, 2 . . . qui représentent le rang r du mode propagé.

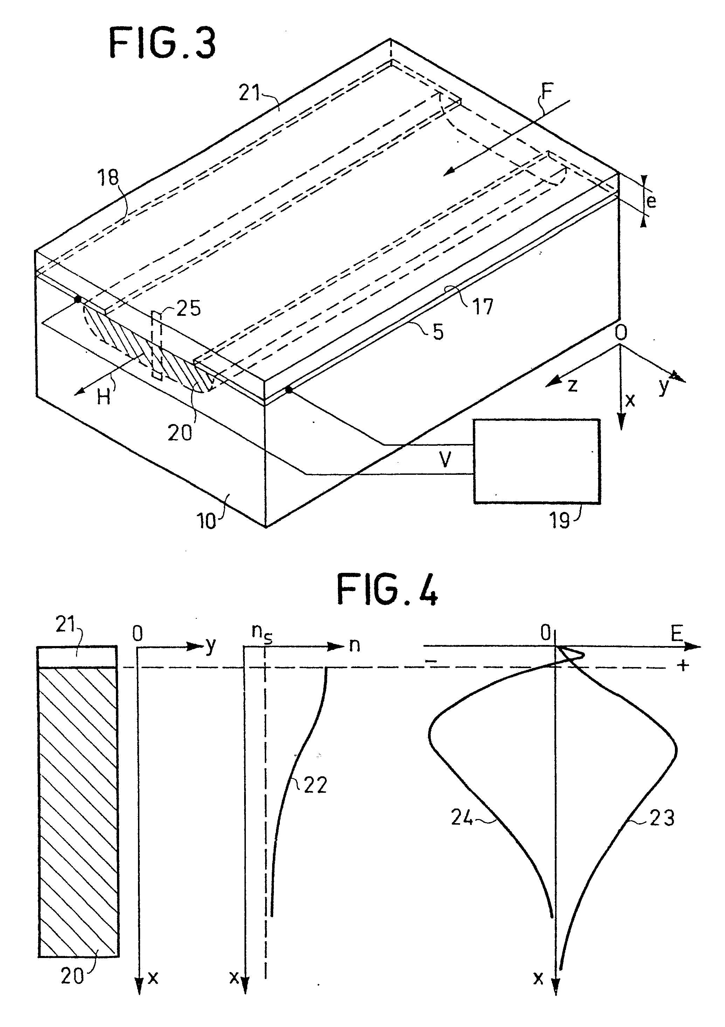

Les plages d'indice 11 et 12 se rapportent à un guide d'onde obtenu par diffusion de titane dans un substrat réalisé en niobate de lithium. La plage 11 concerne l'onde fondamentale et la plage 12 concerne l'onde harmonique engendrée par l'interaction non-linéaire. On voit que l'accord de phase est assuré pour l'ordre 0 du mode de l'onde fondamentale (onde ordinaire) et pour l'ordre 2 du mode de l'onde harmonique (onde extraordinaire). Cette solution classique a pour inconcvénient que la valeur de l'intégrale de recouvrement des modes 0 et 2 qui réalisent l'accord de phase est faible. Si x est la direction perpendiculaire à la surface du substrat orientée vers l'intérieur (voir sur la figure 3) le profil de champ électrique de l'onde fondamentale peut s'exprimer par $E_r^\omega$ (x) et celui de l'onde harmonique par $E_r^{k\omega}$ (x), où k est le rang de l'harmonique, r le rang du mode propagé et $\omega$ la pulsation optique de l'onde fondamentale. Dans le cas du doublage de fréquence, l'intégrale de recouvrement est donnée par la relation:

$$\int_{-\infty}^{+\infty} d_{NL}(x) \cdot [E_r^\omega(x)]^2 \cdot E_r^{2\,\omega}(x)\, dx \qquad (1)$$

où $d_{NL}$ est l'élément approprié du tenseur de nonlinéarité.

Pour obtenir une valeur élevée de l'intégrale de recouvrement, il faut choisir un bon profil de mode pour l'onde harmonique qui ait une extension selon x comparable à celle du profil de l'onde fondamentale.

Les plages d'indice 13 et 14 se rapportent à un guide d'onde obtenu par diffusion de nickel dans le niobate de lithium.

On voit que la plage 13 de l'onde fondamentale n'a pas de zone de recouvrement avec la plage 14 de l'onde harmonique. Il en résulte qu'aucun accord de phase ne peut être obtenu à priori.

Les plages d'indice 15 et 16 de la figure 2 se rapportent à un guide d'onde composite conforme à l'invention. Ce guide composite est réalisé à partir d'un substrat en niobate de lithium, dans lequel on a diffusé du nickel et dont la surface est revêtu d'une couche passive d'oxyde de niobium $Nb_2O_5$ d'épaisseur appropriée.

La plage d'indice 15 de l'onde fondamentale est peu modifiée par rapport à la plage 13 qui concerne le même guide sans la couche passive. Par contre, la plage d'indice 16 qui correspond à l'onde harmonique s'est largement étendue vers la droite. On voit que l'on peut réaliser un accord de phase entre le mode d'ordre zéro de l'onde fondamentale et par exemple, le mode d'ordre 1 de l'onde harmonique. Un tel accord de phase permet d'obtenir une valeur sensiblement plus élevée de l'intégrale de recouvrement.

Sur la figure 3, on peut voir un dispositif optique non linéaire conforme à l'invention. Pour éviter de surcharger cette figure, on n'a pas représenté la source de rayonnement fondamental qui serait par exemple, un laser semiconducteur émettant dans le proche infrarouge.

L'interaction non-linéaire est confinée dans le guide d'onde 20 obtenu en diffusant du nickel à partir de la face supérieure 5 du substrat 10 en niobate de lithium. Une couche passive 21 d'oxyde de niobium recouvre le guide 20 et peut s'étendre de part et d'autre jusqu'au bord du substrat 10. La couche passive 21 est choisie transparente aux longueurs d'ondes des rayonnements fondamental F et harmonique H; elle doit présenter un indice de réfraction élevé pour que l'énergie électromagnétique circulant dans le guide 20 y soit convenablement couplée. L'épaisseur e de la couche passive 21 est choisie pour obtenir l'accord de phase désiré.

A titre d'exemple non limitatif, en se rapportant au vide pour une longueur d'onde du fondamental $\lambda_F$ = 1 μm et pour une longueur d'onde de l'harmonique $\lambda_H$ = 0,5 μm, on peut adopter un profil d'indice du guide diffusé dans le niobate de lithium donné par l'expression suivante:

$$n(x) = n_s + \Delta n\ e^{-\frac{x^2}{a^2}}$$

avec

    a = 3 μm
    $n_s$, indice du niobate de lithium
    $\Delta n$, variation en surface de l'indice.

En adoptant une couche passive 21 d'épaisseur e = 0,5 μm en oxyde de niobium, $Nb_2O_5$, on peut obtenir un rendoment de conversion de 10% avec un guide de 5 μm de large et de 1 cm de long. Ainsi donc, une source infrarouge d'une puissance de 20 mW peut en combinaison avec le dispositif qui vient d'être décrit fournir dans le spectre visible une puissance convertie de 2 mW. Le contrôle de l'accord de phase dépend de l'épaisseur e donnée à la couche 21. Afin de rendre plus aisé cet accord, l'invention prévoit de doter le dispositif de la figure 3 d'électrodes 17 et 18 qui encadrent le guide 20. Ces électrodes sont par exemple déposées à la surface 5 du substrat 10 avant d'y déposer la couche passive 21. En reliant les électrodes 17 et 18 à un générateur 19 de tension V réglable, on peut mettre à profit les propriétés électro-optiques du niobate de lithium pour parfaire l'accord de phase. Cette tension peut aussi servir à détruire l'accord de phase, afin de moduler l'énergie lumineuse fournie par la conversion non-linéaire.

Sur la figure 4, on a représenté une tranche 25 du guide composite de la figure 3 avec le profil d'indice n en fonction de la profondeur x sous la surface du substrat et les profils des distributions de champ électrique E. La courbe 22 donne le profil d'indice, la courbe 23 donne le profil du mode d'ordre zéro du rayonnement fondamental et la courbe 24 donne le profil du mode d'ordre un du rayonnement harmonique. L'intégrale de recouvrement calculée d'après les profils de mode 23 et 25 fournit une valeur élevée propice à un bon rendement de conversion.

L'exemple de réalisation décrit permet de doubler la fréquence du rayonnement incident, mais on peut également étendre le domaine de l'invention à unemultiplication de fréquence d'ordre supérieur ou à la création d'effets paramétriques. Bien que l'on ait décrit dans ce qui précède et représenté sur les dessins, les caractéristiques essentielles de la présente invention appliquées à des modes de réalisation préférés de celle-ci, il est évident que l'homme de l'art peut y apporter toute modification de forme ou de détail qu'il juge utiles, sans pour autant sortir du cadre de l'invention. En particulier, la couche passive peut être simple ou composite et être confectionnée avec d'autres matériaux que le $Nb_2O_5$, par exemple le $TiO_2$. L'interaction non linéaire permet également d'envisager la génération d'un rayonnement qui soit un produit de modulation de deux rayonnements incidents.

## Revendications

1. Dispositif optique non linéaire destiné à engendrer un rayonnement harmonique (H) à partir d'un rayonnement fondamental (F) incident, ces rayonnements étants propagés par un guide d'onde optique (20) obtenu en diffusant un ion métallique déterminé depuis la surface d'un substrat (5) en niobate de lithium, l'interaction non linéaire génératrice dudit rayonnement harmonique (H) siègeant dans ledit guide, caractérisé en ce que l'ion métallique utilisé pour la réalisation par diffusion dudit guide d'onde (20) est tel qu'il donne lieu à un guide d'onde pour lequel la plage d'indice effectif du rayonnement fondamental est normalement située plus haut que, et ne se recouvre pas avec, celle du rayonnement harmonique, de sorte qu'il ne permet pas de réaliser directement l'accord de phase requis pour la conversion désirée en harmonique; ledit accord de phase étant assuré au moyen d'une couche passive (21) recouvrant la surface libre dudit guide d'onde (20), dont l'indice de réfraction est choisi suffisamment élevé pour que l'énergie électromagnétique circulant dans le guide (20) soit convenablement couplée, et dont l'épaisseur (e) est choisie pour obtenir ledit accord de phase par relèvement adéquat des indices effectifs correspondant au rayonnement harmonique; ledit accord de phase étant établi entre le mode de propagation d'ordre zéro dudit rayonnement fondamental (F) et un mode de propagation d'ordre supérieur dudit rayonnement harmonique (H).

2. Dispositif selon la revendication 1, caractérisé en ce que des moyens électriques (17, 18, 19) d'ajustement de l'accord de phase sont prévus.

3. Dispositif selon la revendication 2, caractérisé en ce que ces moyens électriques comprennent une source de tension de commande (19) reliée à deux électrodes (17, 18) qui encadrent le guide d'onde (20).

4. Dispositif selon l'une quelconque des revendications 1 à 3, caractérisé en ce que l'ion métallique est le nickel.

5. Dispositif selon la revendication 4, caractérisé en ce que la couche passive (21) est réalisée en oxyde de niobium.

6. Source de rayonnement comprenant un dispositif optique non linéaire selon l'une quelconque des revendications précédentes, caractérisée en ce que le rayonnement fondamental (F) est produit par une source de rayonnement monochromatique (3) dont la fréquence est reliée par interaction non linéaire à celle du rayonnement harmonique délivré.

7. Source selon la revendication 6, caractérisée en ce que la source de rayonnement monochromatique (3) est un laser à semiconducteur émettant dans l'infra-rouge.

8. Source selon la revendication 7, caractérisée en ce que le rayonnement harmonique délivré est un rayonnement visible.

9. Source selon la revendication 6, caractérisée en ce qu'au moins un second rayonnement fondamental produit par une autre source est appliqué au guide d'onde.

## Patentansprüche

1. Nichtlineare optische Vorrichtung zur Erzeugung einer harmonischen Strahlung (H) aus einer einfallenden Fundamentalstrahlung (F), wobei diese Strahlungen sich in einem Lichtleiter (20) fortpflanzen, der durch Diffusion eines bestimmten Metallions von der Oberfläche eines Substrats (5) aus Lithium-Niobat her erhalten wurde, und die nichtlineare Interaktion, bei der die harmonische Strahlung (H) entsteht, in dem Lichtleiter erfolgt, dadurch gekennzeichnet, daß das für die Herstellung des Lichtleiters (20) durch Diffusion verwendete Metallion so gewählt ist, daß es einen Lichtleiter ergibt, für den der effektive Indexbereich der Fundamentalstrahlung normalerweise oberhalb des Indexbereichs der harmonischen Strahlung liegt und sich mit diesem nicht überdeckt, derart, daß es nicht möglich ist, direkt die Phasenabstimmung zu erreichen, die für die gewünschte Umsetzung in die Harmonische erforderlich ist, und daß die Phasenabstimmung mithilfe einer passiven Schicht (21) erfolgt, die die freie Oberfläche des Wellenleiters (20) bedeckt, deren Brechungsindex hinreichend hoch für eine zureichende Kopplung der in dem Lichtleiter (20) zirkulierenden elektromagnetischen Energie gewählt ist und deren Dicke (e) so gewählt ist, daß sich die Phasenabstimmung durch ausreichende Anhebung der effektiven Indices entsprechend der harmonischen Strahlung ergibt, wobei die Phasenabstimmung zwischen dem Fortpflanzungsmodus der Ordnung Null der Fundamentalstrahlung (F) und einem Fortpflanzungsmodus höherer Ordnung der harmonischen Strahlung (H) erfolgt.

2. Vorrichtung nach Anspruch 1, dadurch gekennzeichnet, daß elektrische Abgleichmittel (17, 18, 19) für die Phasenabstimmung vorgesehen sind.

3. Vorrichtung nach Anspruch 2, dadurch gekennzeichnet, daß die elektrischen Mittel eine Steuerspannungsquelle (19) umfassen, die an zwei Elektroden (17, 18) angeschlossen ist, die den Lichtleiter (20) umrahmen.

4. Vorrichtung nach einem beliebigen der Ansprüche 1 bis 3, dadurch gekennzeichnet, daß das Metallion Nickel ist.

5. Vorrichtung nach Anspruch 4, dadurch gekennzeichnet, daß die passive Schicht (21) aus Nioboxid gebildet wird.

6. Strahlungsquelle mit einer nichtlinearen optischen Vorrichtung nach einem beliebigen der vorhergehenden Ansprüche, dadurch gekennzeichnet, daß die Fundamentalstrahlung (F) von einer Quelle monochromatischen Lichts (3) erzeugt wird, deren Frequenz durch nichtlineare Interaktion mit der harmonischen Ausgangsstrahlung verknüpft ist.

7. Quelle nach Anspruch 6, dadurch gekennzeichnet, daß die monochromatische Strahlungsquelle (3) ein Halbleiterlaser ist, der im Infrarotbereich sendet.

8. Quelle nach Anspruch 7, dadurch gekennzeichnet, daß die harmonische Ausgangsstrahlung eine sichtbare Strahlung ist.

9. Quelle nach Anspruch 6, dadurch gekennzeichnet, daß mindestens eine zweite Fundamentalstrahlung, die von einer anderen Quelle erzeugt wird, an den Lichtleiter angelegt ist.

## Claims

1. A non-linear optical device for producing a harmonic radiation (H) from an incident fundamental radiation (F), said radiations being propagated through an optical wave guide (20) obtained by diffusing a particular metal ion from the surface of a lithium niobate substrate (5), the non-linear interaction which produces said harmonic radiation (H) taking place in said guide, characterized in that the metal ion used for the realisation of said guide (20) by means of diffusion is such that it creates a wave guide in which the effective index range of the fundamental radiation is normally situated at a higher level than that of the harmonic radiation and does not overlap the latter, such that the direct phase matching necessary for the desired conversion into the harmonic radiation cannot take place, said phase matching being ensured by means of a passive layer (21) which recovers the free surface of said wave guide (20), the refraction index of which is chosen sufficiently high so that the electromagnetic energy circulating in the guide (20) is conveniently coupled, and the thickness (e) of which is chosen such that the phase matching is obtained by raising adequately the effective indices corresponding to the harmonic radiation, said phase matching being realized between the propagation mode of zero order of said fundamental radiation (F) and a propagation mode of higher order of said harmonic radiation (H).

2. A device according to claim 1, characterized in that electrical adjusting means (17, 18, 19) are provided for matching the phase.

3. A device according to claim 2, characterized in that these electrical means comprise a control voltage source (19) connected to two electrodes (17, 18) surrounding the wave guide (20).

4. A device according to any one of claims 1 to 3, characterized in that the metal ion is nickel.

5. A device according to claim 4, characterized in that the passive layer (21) is made from niobium oxide.

6. A radiation source incorporating a non-linear optical device according to any one of the preceding claims, characterized in that the fundamental radiation (F) is produced by a monochromatic radiation source (3), the frequency of which is linked by non-linear interaction to that of the supplied harmonic radiation.

7. A source according to claim 6, characterized in that the source of monochromatic radiation (3) is a semiconductor laser emitting in the infrared region.

8. A source according to claim 7, characterized in that the supplied harmonic radiation is a visible radiation.

9. A source according to claim 6, characterized in that at least one second fundamental radiation produced by another source is applied to the wave guide.

# FIG.1

# FIG.2

# FIG.3

# FIG.4